Europäisches Patentamt

European Patent Office

Office européen des brevets

(19)

(11) Publication number: **0 160 458 B1**

# EUROPEAN PATENT SPECIFICATION

(12)

(45) Date of publication of patent specification: **13.03.91**  (51) Int. Cl.⁵: **G01N 35/02**

(21) Application number: **85302735.7**

(22) Date of filing: **17.04.85**

(54) An automatic chemical analyzing apparatus.

(30) Priority: **21.04.84 JP 80795/84**

(43) Date of publication of application:
**06.11.85 Bulletin 85/45**

(45) Publication of the grant of the patent:
**13.03.91 Bulletin 91/11**

(84) Designated Contracting States:
**DE IT SE**

(56) References cited:
**DE-A- 1 921 302**
**GB-A- 2 009 401**
**US-A- 3 221 781**
**US-A- 3 985 508**
**US-A- 4 265 855**

**PATENT ABSTRACTS OF JAPAN, vol. 6, no.**
**104 (P-122)[982], 15th June 1982 & JP-A-57-37**
**263**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Sakamaki, Takeshi c/o Patent Division**
**TOSHIBA CORPORATION PRINCIPAL OFFICE**
**1-1, Shibaura 1-chome Minato-ku Tokyo(JP)**
Inventor: **Watanabe, Fumio c/o Patent Division**
**TOSHIBA CORPORATION PRINCIPAL OFFICE**
**1-1, Shibaura 1-chome Minato-ku Tokyo(JP)**

(74) Representative: **Eyles, Christopher Thomas et al**
**BATCHELLOR, KIRK & CO. 2 Pear Tree Court**
**Farringdon Road**
**London, EC1R 0DS(GB)**

## Description

This invention generally relates to an automatic chemical analyzing apparatus and in particular concerns an improvement of a multi-item automatic chemical analyzing apparatus with a view to enhancing analyzing capability.

For chemical analyses carried out in series, chemical analyses are used to an increasing extent which automatically carry out the sampling, the adding of reagents, the provision of the suitable reaction conditions for the analyses, the measurement, the indication and printing of the data. Such devices are used, for example, in hospitals and clinics where measurements in large numbers must be carried out in a short time.

Many automatic chemical analyzing apparatus in current use can simultaneously analyze one or more test items, which differ in number depending upon the model, which apparatus include a plurality of reaction lines used for the respective specific test without any item change. Such an apparatus is called a multi-channel automatic chemical analyzer.

An analyzer is also known which includes only one reaction line (meaning a path along which reaction tubes are arranged in a line or a pipe through which samples spaced by bubbles pass) and which can make a multi-item (multi-component) measurement. Such a known one-line automatic chemical analyzer is of a type in which each of the samples are successively analyzed in terms of a plurality of specific items; or a type in which the same reaction line is used and all associated samples are first analyzed in terms of one item and then in terms of another item after the end of analysis of the preceding item.

In the above-mentioned prior art, the multi-channel automatic chemical analyzer has operated at very poor efficiency with disadvantageous operation of unnecessary reaction lines for the non-selected test items of each sample, because usual samples, it is individually observed, often need no test of all of the items being conducted by such apparatus. Further, in the single channel automatic chemical analyzer, it takes more time to obtain results about all the test items of one sample if the test items increase in number with respect to the individual samples, or the samples to be analyzed increase, and it is difficult to eliminate the contamination between the different reagents supplied to the same cuvette in a series because of failing to cleanse the cuvette fully in the elapsed time.

In addition, many chemical reactions must be analyzed over a period of 5 minutes or more so as to measure with high accuracy the rate of reactions which generally proceed slowly. This is contrary to the increasing of the sample processing speed. However, this requirement is very important to achieve an accurate measurement of the samples.

US-A-4,265,855 discloses a system for automatically processing liquids in open-ended containers. The containers are moved past a plurality of operating stations that carry out the following operations: washing, reagent-adding, incubation, detection, and storage. The operating stations for washing and reagent-addition include vertically and horizontally movable assemblies for operating upon the containers. The containers are carried in groups in individual carrying blocks which are moved throughout the system.

US-A-3,985,508 discloses apparatus for automatically performing multiple chemical analyses of a plurality of liquid specimens, wherein there are means for loading a plurality of test samples from each specimen into a row of reaction vessels. As the reaction vessels are transported to a determining apparatus, other apparatus adds reagents to preselected ones of the reaction vessels a predetermined time before the reaction vessels reach the determinating apparatus.

Each of the several sample containers initially containing the specimens is transported in a track in parallel with the one of the several rows of reaction vessels containing the test samples from the specimen toward the determinating apparatus. The sample containers can be automatically removed from the track after the determinations have been completed and the containers placed in predetermined sequential order in a tray.

GB-A-2,009,401 a discloses apparatus for incubating a plurality of samples, e.g. biological samples, comprising an incubation station with a plurality of containers to which samples together with diluent and reagents are supplied. The containers are arranged in rows in two side-by-side columns and are circulated in their rows along the columns and from the end of one column to the beginning of the other column. Sample removal means is provided either at a fixed location or movable relative to the incubator. Circulation of the containers in a chamber is controlled by a computer in dependence on the assay being performed.

The station may include a plurality of sections each similar to the station shown in the abstract of this document but with like columns in communication so that rows of samples can be moved from the column of one section to the column of an adjacent corresponding section, to provide alternative paths for circulation of the samples.

Accordingly, the present invention seeks to provide an improved automatic chemical analyzing apparatus in which many samples having different test items are analyzed in such a manner that any reaction line (channel) is designated randomly for any analytical test being conducted on a sample so that there are no unused cuvettes in an array of cuvettes in the apparatus.

The invention also seeks to provide an automatic chemical analyzing apparatus with increased flexibility, so that each cuvette may randomly include a sample and reagent fluid for any analysis without regard to the number of tests or reagents.

The present invention also seeks to provide an automatic chemical analyzing apparatus for allowing the arrangement of a large number of cuvettes in a small space to reduce the size of a system capable of analyzing large numbers of samples in a short time.

In accordance with the present invention there is provided an automatic chemical analysing apparatus comprising:

a cuvette assembly (30) including two opposed rows of sample magazines arranged sequentially, each magazine having a plurality of reaction tubes (32) arranged in rows;

a conveying means for advancing sample magazines, heating means (36) for heating samples in reaction tubes to a desired temperature for analysis;

analyzing means (46) which can analyse a sample in a reaction tube (32) after reaction of said sample with added reagent;

characterised in that

each of said opposed rows includes two segments arranged along a common line such that each segment of each row is arranged opposite a corresponding segment of the other row;

a first pair of opposed segments (60a,62a) forms a preparation circuit wherein a sample can be added to a reaction tube from a sample dispensing station (22);

a second pair of opposed segments (60b,62b) forms a reaction circuit wherein reagent can be added to a reaction tube from a reagent dispensing station (24);

magazines in said circuits are capable of being advanced from station to station

within each row segment and capable of transfer between row segments of their respective circuit, such advancing and transfer within the preparation circuit being capable of operation independently of advancing and transfer within the reaction circuit;

magazines in the preparation circuit being capable of transfer to the reaction circuit for analysis;

magazines in the reaction circuit being capable of transfer to the preparation circuit for cleaning reaction tubes after analysis and drying for reuse and recycling; and

the analyzing means being capable of photometrically analyzing a sample in a reaction tube at a testing station during transfer of a magazine between opposed segments of the reaction circuit.

Conveniently, the samples or specimens each added with reagent in the cuvettes can be analysed by individual irradiation by light during transportation along a reaction circuit, whereby the quantity of light of a specified wavelength transmitted through the individual sample is measured by a spectrophotometer, each cycle being at a different time point allowing increased processing speed with enhanced accuracy and precision.

Also in accordance with the present invention, the measurement by a spectrophotometer in a reaction circuit can be carried out independently from the washing and drying of the cuvettes in a washing-drying line, and both operations can be conducted in parallel, whereby it may take more time to wash and dry the cuvettes fully in order to render them ready for subsequent recycling and reuse.

According to the present invention the analyzing apparatus is also used in a method of analysis (see claim 8).

A more complete appreciation of the invention and many of the attendant advantages thereof will be readily obtained by reference to the following detailed description given by way of example when considered in connection with the accompanying drawings, wherein:

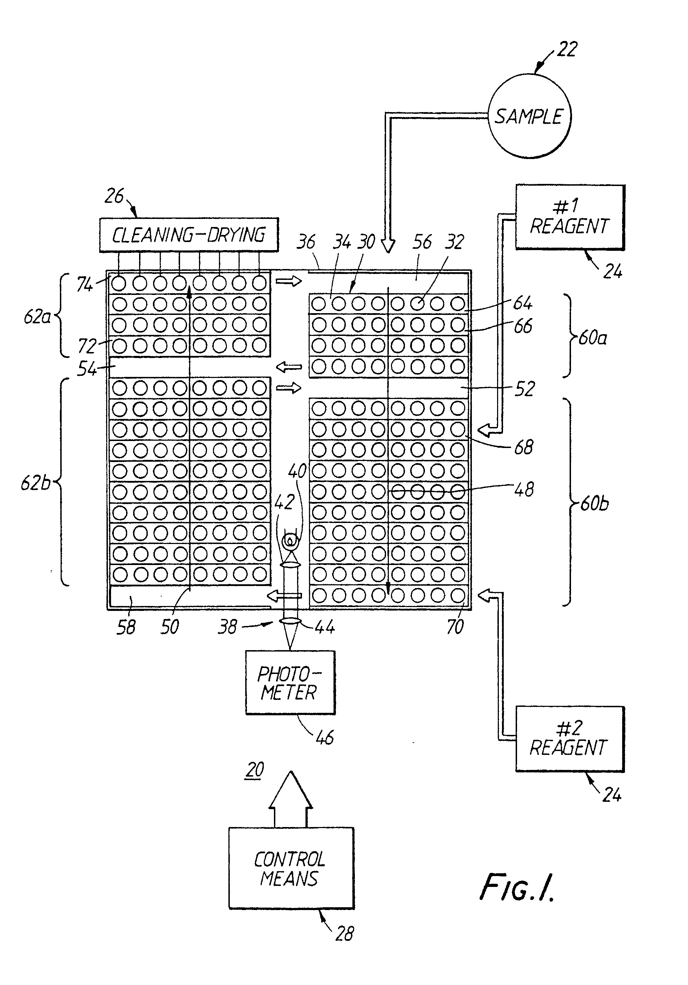

Figure 1 is a diagram of an example of an automatic chemical analyzing apparatus in accordance with the present invention;

Figure 2 schematically illustrates the operation of the apparatus of Figure 1 in carrying out photometry for the samples in the cuvette assembly;

Figure 3 schematically illustrates the operation of the apparatus of Figure 1 in forwarding the cuvette assembly after the photometry;

Figure 4 schematically illustrates the operation of the apparatus of Figure 1 in transferring the cuvette assembly between the cleaning-drying and reaction channels;

Figure 5 schematically illustrates an operation of the apparatus of Figure I in returning the arrangement of the cuvette assembly to the beginning condition of the measuring cycle;

Figure 6 schematically illustrates the operation of the apparatus of Figure I in completing one measuring cycle for certain samples;

Figure 7 schematically illustrates an alternative embodiment of the present invention, which shows the position of the subject cuvette assembly at the end of measuring cycle; and

Figure 8 schematically illustrates the alternative embodiment of Figure 7, showing the arrangement of the subject cuvette assembly at the beginning of the following measuring cycle to the cycle shown in Figure 7.

Referring now to the drawings and particularly

to Figure I, the automatic chemical analyzing apparatus of the present invention is generally indicated by the reference numeral 20 and generally includes (I) a cuvette assembly 30 which comprises a plurality of rows of open-topped containers or reaction tubes 32 arranged in sample magazines 34 of rectangular body shape, made of metal, such as aluminum blocks which are heated to a desired temperature, (2) suitable heating means 36 which are positioned for heating the reaction tubes 32 through the magazines 34 to the desired temperature as required by the chemical tests being performed, which heating means suitably consist of a electric heater, (3) a readout or testing assembly 38 for analyzing the results of the chemical tests being performed including a light source 40 having a filament that directs light throughout the visible and ultraviolet spectrum through a lens 42 through a window provided in the magazine 34 for each sample, through the sample in the reaction tubes 32, through a lens 44, and to a light measuring means such as photo voltaic cell 46, (4) a sampling dispensing assembly 22 for holding the sample to be tested including a pickup and dispensing apparatus for picking up the required amount of sample from the indexing table and dispensing each sample in a reaction tube 32 in the required amounts and for the tests programmed, (5) a reagent dispensing assembly 24 which may include a plurality of containers of reagents connected to metered dispensing units which in turn are connected to outlets positioned above the tubes 32 at the desired position or station on the reaction channel constructed by the cuvette assembly 30 for dispensing reagents in the proper sequence and at the proper station for the tests being performed, (6) tube drying means 26 for drying the tubes 32 in preparation for reuse and recycling, (7) cleaning means also shown at 26 for cleaning the tubes 32 after the test has been concluded, and (8) suitable control means 28 for selectively controlling the sequential multiple analysis and synchronization of the above-mentioned components.

Referring again to Figure I, the construction of a preferred form of the reaction channels is best seen. The cuvette assembly 30 comprises two channels 48, 50 of the sample magazines 34, each of which magazines holds a transverse row of reaction tubes 32, the magazines 34 being periodically indexed a predetermined distance to move the tubes 32 from one position or station to the next so that the appropriate chemical steps may be performed upon the programmed samples at the proper station, time and sequence. The magazines 34 in each channel 48, 50 are forwarded in the perpendicular direction to the traverse row of reaction tubes 32. The direction of movement in each channel 48, 50 is opposite to the other to construct a complete loop including these channels of the sample magazines 34. Therefore, at the end of each channel 48, 50, the magazine 34 which has reached that position is transferred to the other channel by being pushed by suitable means.

Further, a plurality of the sample magazines 34 arranged one after the other in the channels 48, 50 are segmented by spaces 52, 54 equivalent to one sample magazine. Of course, the positions of these spaces 52, 54 in relation to the fixed heating means 36 are changeable in accordance with the operation of the automatic chemical analyzing apparatus. Also, it is required to have a space between the end of each channel 48, 50 and the heating means 36 of at least one sample magazine to allow the transfer of a single sample magazine 34 from one channel to the other in accordance with the operation of the apparatus 20. Here, the space in the first channel 48 is indicated by the reference numeral 56, the other in the second channel 50 by the reference numeral 58. As will be understood from the foregoing description, these spaces are changed in position according to the movement of the loop in the apparatus 20.

When the tubes 32 are indexed to cleaning-drying segments 60a, 62a in both channels 48, 50, the tubes 32 are washed and cleaned. When the tubes 32 are indexed to reaction segments 60b, 62b in both channels 48, 50, the chemical reaction in the contents of the tubes 32 can proceed.

As shown in Figure I, the magazines 34 in the reaction segments 60b, 62b continue to be forwarded along the complete reaction line by being transferred at each end of the respective reaction channel until the predetermined number of measurements for one magazine are concluded. In a way similar to the reaction channels, movement of the magazines 34 in the cleaning-drying segments 60a, 62a is carried out.

During movement of the cuvette assembly 30 in the direction indicated by an arrows so as to be transferred from the first reaction channel to the second reaction channel at the ends, the samples contained in the reaction tubes 32 are successively projected by a light beam from the light source lamp 40 and the resulting transmission of light is evaluated and recorded for the analytical measurements in the process by the photometer 46.

The sampling dispensing assembly 22 dispenses a measured amount of sample into a reaction tube 32 at the proper positions or stations for performing the desired programmed tests, such as the position indicated by the reference numeral 66, and the various reagents required for the various chemical tests drawn from reagent containers (not shown) are dispensed into the reaction tubes 32 at the proper positions or stations and in the proper amounts, for example, the first reagent is dispensed into the reaction tubes which are indexed to a reagent station, such as the position indicated by the reference numeral 68, and the second reagent is added at the position indicated by the reference numeral 70.

The cuvette assembly 30 is indexed to the segment 62a defined by the magazines at the positions 72 through 74 after the chemical analysis has been performed, during which the reaction tubes 32 in the magazines 34 are washed, and dried by suitable means at 26 in preparation for reuse and recycling.

Operation of the System

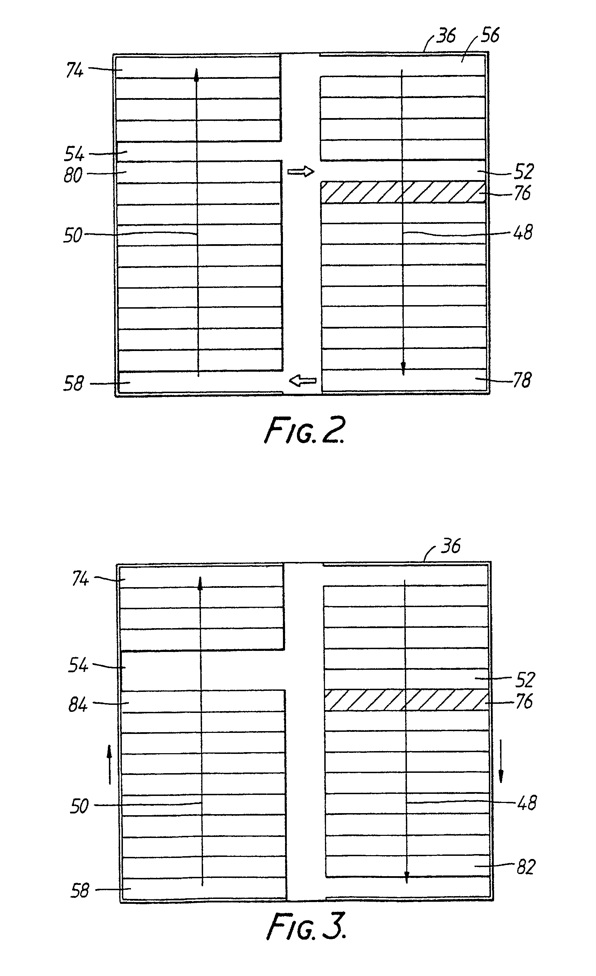

Referring now to Figures 2 - 8, the operation and movement of the automatic chemical analyzing apparatus according to the present invention will be described hereinafter. There is shown one embodiment of the cuvette assembly transporting operation which presents the cuvette assembly 30 to the proper position for sample dispensing, reagent dispensing, chemical analyzing, and for presentation to cleaning-drying stages of the tubes. In this embodiment, a number of cuvette assemblies 30 are arranged in the first reaction channel 48, each followed by one magazine 34.

In this embodiment, the cuvette assembly 30 is moved the periodic distance after remaining in position for a set time interval by a transport means which is a continuous chain arranged in a elongated circular pattern. The time required to move the cuvette assembly 30 from one station to the next is referred to as the machine cycle time. It should be mentioned that, in the automatic analyzing apparatus of the discrete type like the present invention, the chemical controls or manipulations such as photometry, sample dispensing, reagent dispensing, washing or the like can be carried out within the above machine cycle time for a sample. One cycle is to be completed within the predetermined time duration, such as l0 seconds.

In Figure 2, after a magazine 34 receiving new samples added with a preselected first reagent in the reaction tubes is moved to the position 76 in the first reaction channel 60b, the magazine 34 in the end position 78 of the first reaction channel 60b is moved toward the end position 58 of the second reaction channel 62b, simultaneously the magazine 34 in the other end position 80 of the second reaction is moved back to the position 52 in the first reaction channel 60b. The foregoing cycle of operation continues until each of the samples has been analyzed during the preselected time interval, for example 5 minutes. During this cycle, the samples contained in the reaction tubes 32 of the magazine 34 in the position 78 are measured by the photometer 38 during its movement to the position 58 by being impinged by the light beam.

In Figure 3, on the sequential cycle to the foregoing cycle, all the magazines 34 in the positions 52-82 are forwarded by a step and simultaneously the magazines 34 in the positions 58-84 are forwarded by a step. These two operations are continuously repeated until the photometry for certain samples contained in a single magazine has been concluded by times corresponding to the number of the magazines positioned in the reaction channels 60b, 62b as previously described. Thus, the arrangement of the cuvette assembly 30 returns to the condition shown in Figure l.

The predetermined measurement being finished for the samples in one cuvette assembly 30 as understood from the foregoing description, the cuvette assembly 30 containing the samples analyzed and the cuvette assembly 30 prepared for chemical analysis of another set of samples are exchanged between the cleaning-drying channels 60a, 62a and the reaction channels 60b, 62b.

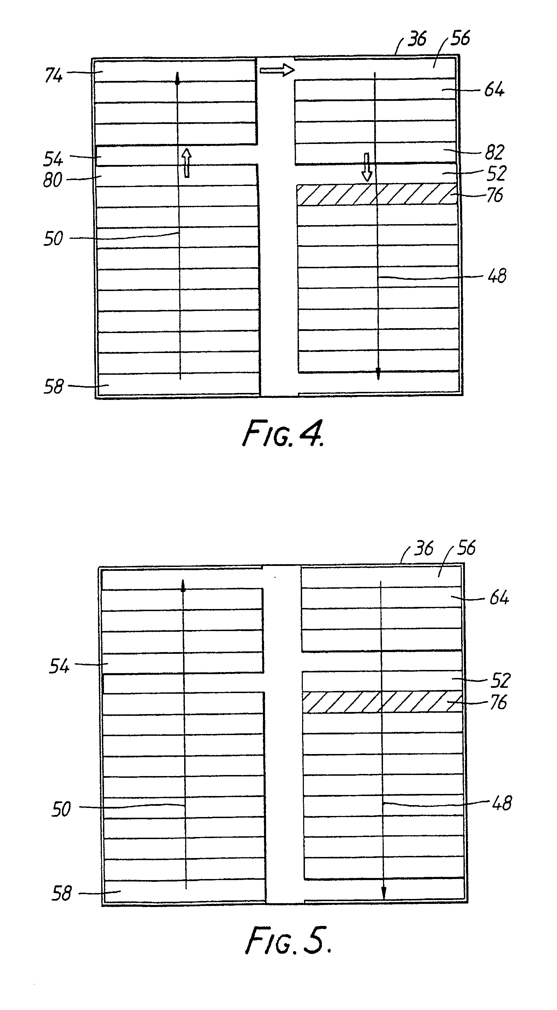

Referring to Figure 4, first, the magazine 34 in the position 80 can be routed from the reaction channel 62b of the second reaction line 50 to the cleaning-drying channel 62a, which has the samples whose analysis is complete. At the same time, the magazine 34 in the position 74 of the cleaning-drying channel 62a is transferred to the position 56 of the first cleaning-drying channel 60a. Further, the cuvette assembly 30 in the position 82 of the first cleaning-drying channel 60a, which has the mixed samples and reagents to be analyzed, can be transferred from the cleaning-drying channel 60a to the reaction channel 60b. Thereby, the magazine 32 in the position 82 is moved to the position 52 of the reaction channel 60b.

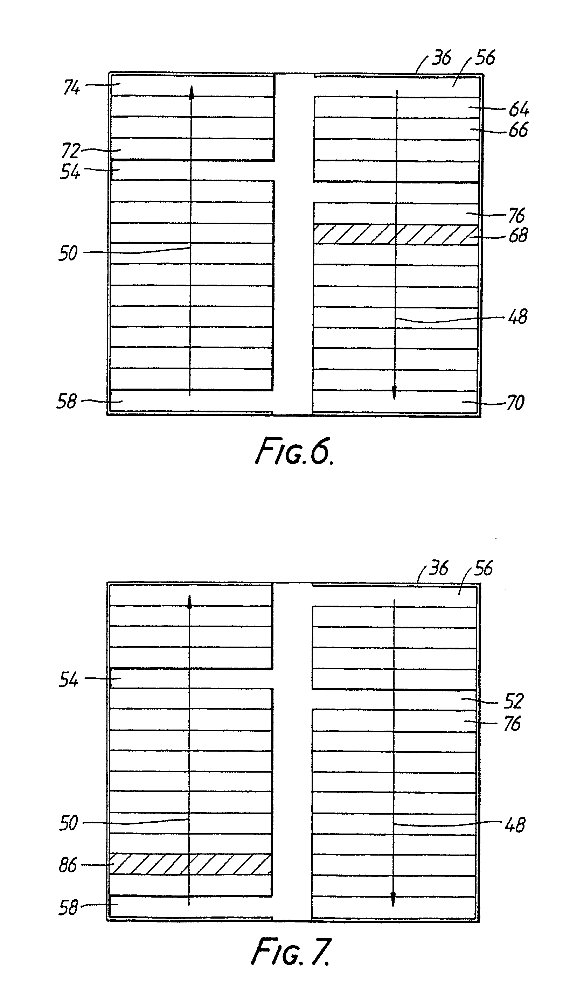

The conditions of arrangement of the cuvette assembly 30 in this apparatus after the above operation is done is seen in Figure 5. All the cuvette assemblies 30 arranged in the heating means 36 as shown in Figure 5 are moved in counterclockwise direction by a step. Finally, the magazine 32 which was in the position 76 of the first reaction channel 60b at the beginning of the first reaction cycle shown in Figure 2, is moved to the successive position 68 to the position 76 (Figure 6). In accordance with the operations as above described, one cycle has been completed, which is needed to analyze the chemical reactions over the required period to achieve an accurate measurement of the samples. While the cuvette assembly 30 is in the position 68 of the reaction channel 60b (the second reagent adding station), the second reagent is added into the reaction tubes 32 of the cuvette assembly 30 by suitable reagent dispensing means.

As will be understood from the above mentioned operations, the counterclockwise movement of the cuvette assembly 30 in the cleaning-drying channels 60a, 62a can proceed slowly, on the contrary, the movement of the cuvette assembly 30 in the reaction channels 60b, 62b can be fast to improve sample processing capability significantly. Therefore, these can be allowed more time to prepare for the preselected chemical analysis, such as cleaning, drying of the reaction tubes, sample dispensing, reagent dispensing which during the measurement for certain samples is carried out in the reaction channels 60b, 62b. It is very important to eliminate the contamination between the different samples or reagents by completing the cleaning-drying of the tubes 32.

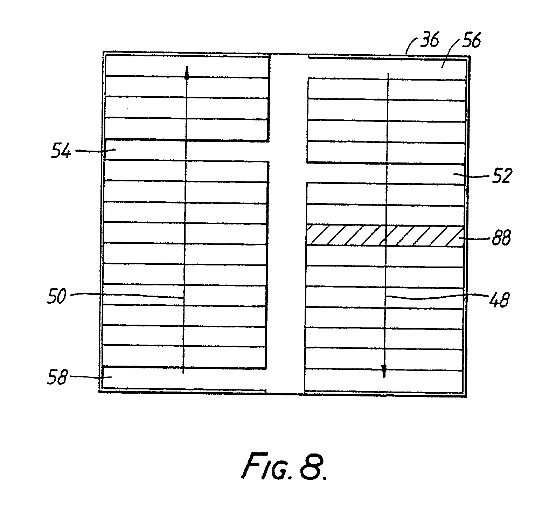

Referring to Figures 7 - 8, there is seen an alternative embodiment of the present invention wherein the processing capability is increased sacrificing the measurment times by the photometer 38. In the first embodiment, one measuring cycle includes the operations described before until the cuvette assembly 30 is revolved in the reaction channels 60b, 62b in a counterclockwise direction by one revolution and further forwarded by one step. In the alternative embodiment, one measuring cycle is completed without one revolution of the cuvette assembly in the reaction channels 60b, 62b.

During use the cuvette assembly 30 in the position 76 of the first reaction channel 60b at the beginning of the measuring cycle is moved toward to the position 86 in the second reaction channel 62b (shown in Figure 7) in accordance with the operations as described previously. The cuvette assembly 30 to be analyzed thus passes through detection station (Photometer 38). Then the photometry for the samples contained in the cuvette assembly 30 is carried out the times corresponding to the number of the cuvette assemblies 30 arranged between the positions 76 - 86.

After the samples for given analyses have been concluded in the detection station, a new cuvette assembly 30 containing further samples added with the reagent will be immediately transferred to the reaction channel 60b from the preparation channel 60a; simultaneously, the cuvette assembly 30 for which the measurement has been completed will be routed from the reaction channel 62b to the preparation channel 62a. It should be appreciated that there will be many cuvette assemblies at various stations within the apparatus simultaneously. By simultaneously, it is not meant that the beginning and end of each operation coincides with the beginning and end of other operations but rather that there is a substantial overlapping of the operational steps involved. Thus, one cuvette assembly 30 will be in the sample dispensing station while another will be in the detection station.

At the subsequent cycle, the cuvette assembly 30 moved toward to the position 68 (shown in Figure 6) during the previous cycle will be in the position 88 shown in Figure 8 by being revolved counterclockwise by the predetermined steps. Obviously, during the cycle the cuvette assemblies 30 will be exchanged between the reation channels 60b, 62b and the preparation channels 60a, 62a.

While the invention has been described with reference to preferred embodiments thereof, it will be understood by those skilled in the art that various changes in form and details may be added without departing from the true spirit and scope of the invention. Many alternative embodiments can be conceived which will achieve the advantageous results herein disclosed. For example, the reaction mixture contained in the cuvette assembly 30 can be analyzed by passing once through the photometer 38 during n cycles ($n = 1 \sim M$; M; the number of the cuvette assemblies 30). It should be mentioned that the number of measurement and reaction times are sacrificed in this embodiment. On the contrary, it can be designed that the cuvette assembly 30 containing samples to be analyzed passes a beam of light at the detection station several times during one cycle.

However, there is a restriction in selecting n arising from the relationship with the stepping of the cuvette assembly 30. The meaning of step used in this application is the movement of the cuvette assembly 30 in sequence for each operation.

Now, supposing the number of the cuvette assembly 30 arranged in the reaction channels 60b, 62b is 2n; the number of steps to complete one cycle for a given measurement of sample is p, the cuvette assembly which has completed the measurement should be routed from the reaction channel 62b to the preparation channel 62a at the 2nth cycle, neither prior, nor after that. Therefore, neither an odd number nor divisor can be selected as the number of the cuvette assembly 30, which corresponds to the distance in which the assembly moves during one step.

Further, in case of $p > 2n$, (p minus a multiplicative number of 2n) can be satisfied with the above condition by selecting an appropriate number as p.

It is contemplated that any analytical procedure can be adapted to the herein disclosed invention. While the apparatus and systems herein disclosed are particularly suitable for routine and stat blood chemistry, such as glucose etc., numerous other analytical tests which are run periodically in any chemical environment can be automatically performed in accordance with the aforesaid disclosure.

Accordingly, all substitutions, additions, and modifications to which the present invention is readily susceptible, without departing from the scope of the appended claims, are considered part of the present invention.

## Claims

1. An automatic chemical analysing apparatus comprising:

a cuvette assembly (30) including two opposed rows of sample magazines arranged sequentially, each magazine having a plurality of reaction tubes (32) arranged in a row;

a conveying means for advancing sample magazines, heating means (36) for heating samples in reaction tubes to a desired temperature for analysis;

analyzing means (46) which can analyse a sample in a reaction tube (32) after reaction of said sample with added reagent;

characterised in that

each of said opposed rows includes two segments arranged along a common line such that each segment of each row is arranged opposite a corresponding segment of the other row;

a first pair of opposed segments (60a,62a) forms a preparation circuit wherein a sample can be added to a reaction tube from a sample dispensing station (22);

a second pair of opposed segments (60b,62b) forms a reaction circuit wherein reagent can be added to a reaction tube from a reagent dispensing station (24);

magazines in said circuits are capable of being advanced from station to station within each row segment and capable of transfer between row segments of their respective circuit, such advancing and transfer within the preparation circuit being capable of operation independently of advancing and transfer within the reaction circuit;

magazines in the preparation circuit being capable of transfer to the reaction circuit for analysis;

magazines in the reaction circuit being capable of transfer to the preparation circuit for cleaning reaction tubes after analysis and drying for reuse and recycling; and

the analyzing means is capable of photometrically analyzing a sample in a reaction tube at a testing station during transfer of a magazine between opposed segments of the reaction circuit.

2. Chemical analyzing apparatus as claimed in claim 1 wherein in said preparation circuit (60a,62a) the magazines can be advanced at a slower rate than those magazines in said reaction circuit (60b,62b).

3. Chemical analyzing apparatus as claimed in claim 1 or 2 wherein a testing assembly (38) comprising analysis means (40,42,44) is positioned within a channel defining a space between said opposed rows of sample magazines to analyze said samples.

4. Chemical analyzing apparatus as claimed in claim 3 wherein a magazine in which sample analysis has been completed is transferred from said reaction circuit to the preparation circuit only after that magazine has passed through said testing assembly more than once within the reaction circuit.

5. Chemical analyzing apparatus as claimed in any preceding claim wherein two reagent dispensing stations (24) are provided, capable of separately dispensing at least two reagents to samples in the magazine in the reaction circuit and, further, in said preparation circuit cleaning, drying and sample addition are performed.

6. Chemical analyzing apparatus as claimed in any preceding claim wherein a magazine containing samples to be analyzed can move within and between the opposed segments forming the reaction circuit to monitor the results of the chemical tests for sufficient time to analyze for each sample.

7. Chemical analyzing apparatus as claimed in any one of claims 3 to 6 wherein the testing assembly includes means for light irradiation of individual samples during transfer of a magazine between opposed segments forming the reaction circuit, transmitted light being measured by a spectrophotometer as an analysis step.

8. Use of automatic chemical analyzing apparatus as claimed in any preceding claim in a method of analysis of one or more samples within a magazine.

## Revendications

1. Appareil automatique d'analyse chimique comprenant un dispositif en forme de cuvette (30) comportant deux rangées opposées de magasins d'échantillons disposés séquentiellement, chaque magasin comportant une pluralité de tubes à réaction (32) disposés dans une rangée, des moyens de convoyage pour déplacer les magasins d'échantillons, des moyens de chauffage (36) pour chauffer les échantillons dans les tubes à réaction pour obtenir la température désirée d'analyses, des moyens d'analyses (46) pour analyser un échantillon dans un tube à réaction (32) après réaction dudit échantillon additionné d'un réactif caractérisé en ce que chaque rangée opposée comprend deux segments disposés le long d'une ligne commune de manière que chaque segment de chaque rangée soit disposé opposé au segment correspondant de l'autre rangée, la première paire de segments opposés (60, 62a) constituant un circuit de préparation dans lequel un échantillon peut être envoyé d'un tube à réaction à partir d'une station de distribution (22), la seconde paire de segments (60b, 62b) constituant un circuit de réaction dans lequel un réactif peut être ajouté dans le tube à réaction à partir d'une station (24) de distribution de réactifs, les magasins disposés dans ces circuits étant susceptibles d'être avancés de station en station à l'intérieur de chaque rangée de segments et capables d'être transférés entre les rangées de segments de leur circuit respectif, afin que, l'avance et le transfert à l'intérieur du circuit de préparation permettent des opérations indépendamment de l'avance et du transfert à l'intérieur du circuit de réaction, les magasins, dans le circuit de préparation étant susceptibles de transfert au circuit de réaction pour analyses, les magasins dans le circuit de réaction étant susceptibles de transfert au circuit de préparation pour nettoyage des tubes à réaction après analyse et séchage pour permettre leur réutilisation et leur recyclage, et les moyens d'analyses étant susceptibles d'analyses photométriques d'un échantillon dans un tube à réaction à une station test durant le transfert d'un magasin entre les segments opposés du circuit de réaction.

2. Appareil automatique d'analyse chimique, selon la revendication 1, caractérisé en ce que dans le circuit de préparation (60a, 62a), les magasins peuvent être déplacés dans un rapport plus lent que celui des magasins dans le circuit de réaction.

3. Appareil automatique d'analyse chimique, selon la revendication 1 ou 2, caractérisé en ce qu'il comporte un dispositif de test (38) comportant des moyens d'analyses (40, 42, 44) et est disposé dans un canal définissant un espace entre les rangées opposées de magasins d'échantillons pour analyser ces derniers.

4. Appareil automatique d'analyse chimique, selon la revendication 3, caractérisé en ce qu'il est conçu de manière qu'un magasin dans lequel un échantillon analysé a été complété soit transféré depuis ledit circuit de réaction au circuit de préparation, seulement après que le magasin soit passé à travers le dispositif de test plus d'une fois à l'intérieur du circuit de réaction.

5. Appareil automatique d'analyse chimique, selon les revendications précédentes, caractérisé en ce qu'il comporte deux stations (24) d'envoi de réactifs conçues pour envoyer séparément, au moins, deux réactifs aux échantillons dans le magasin dans le circuit de réaction et, de plus, dans le circuit de préparation, il est prévu le nettoyage, le séchage et l'addition d'échantillons.

6. Appareil automatique d'analyse chimique, selon les revendications précédentes, caractérisé en ce qu'un magasin contenant un échantillon à analyser peut être déplacé à l'intérieur et entre les segments opposés constituant le circuit de réaction pour contrôler les résultats des tests chimiques durant un temps suffisant pour analyser chaque échantillon.

7. Appareil automatique d'analyse chimique, selon l'une quelconque des revendications 3 à 6, caractérisé en ce que le dispositif de test comprend des moyens d'irradiation des échantillons individuels durant le transfert d'un magasin entre les segments opposés formant le circuit de réaction, la lumière transmise étant mesurée par un spectromètre pour constituer une phase d'analyse.

8. Utilisation d'un appareil automatique d'analyse chimique tel que revendiqué dans l'une quelconque des revendications précédentes dans un procédé d'analyse d'un ou plusieurs échantillons dans un magasin.

## Ansprüche

1. Vorrichtung zur automatischen chemischen Analyse mit:
   - einer Küvetten-Anordnung (30), die zwei gegenüberliegende Reihen von aufeinanderfolgend angeordneten Probenmagazinen aufweist, wobei jedes Magazin eine Vielzahl von Reagenzgläsern (32) enthält, die reihenförmig angeordnet sind;

- einer Transporteinrichtung zum Befördern der Probenmagazine, einer Heizeinrichtung (36) zur Erhitzung der Proben in den Reagenzgläsern auf eine gewünschte Temperatur zur Analyse;
- einer Analyseeinrichtung (46), die eine Probe in einem Reagenzglas (32) nach der Reaktion mit einem zugegebenen Reagenz analysieren kann; dadurch gekennzeichnet, daß
- jede der gegenüberliegenden Reihen zwei Abschnitte aufweist, die so entlang einer gemeinsamen Geraden angeordnet sind, daß jeder Abschnitt einer Reihe dem entsprechenden Abschnitt der anderen Reihe gegenüberliegt;
- ein erstes Paar gegenüberliegender Abschnitte (60a, 62a) einen Vorbereitungskreis bildet, in dem eine Probe aus einer Probenausgabestation (22) einem Reagenzglas zugegeben werden kann;
- ein zweites Paar gegenüberliegender Abschnitte (60b, 62b) einen Reaktionskreis bildet, in dem ein Reagenz aus einer Reagenzausgabestation (24) einem Reagenzglas zugegeben werden kann;
- die Magazine in den Kreisen in jedem Reihenabschnitt von Station zu Station beförderbar sind und zwischen den Reihenabschnitten ihres jeweiligen Kreises versetzbar sind, so daß Beförderung und Versetzung innerhalb des Vorbereitungskreises unabhängig funktionsfähig von der Beförderung und Versetzung innerhalb des Reaktionskreises sind;
- die Magazine des Vorbereitungskreises zur Analyse in den Reaktionskreis versetzbar sind;
- die Magazine aus dem Reaktionskreis in den Vorbereitungskreis zur Reinigung nach der Analyse und zum Trocknen der Reagenzgläser zur Wiederbenutzung und Rückführung versetzbar sind; und
- die Analyseeinrichtung photometrische Analysen einer Probe in einem Reagenzglas an einer Teststation auszuführen vermag, während ein Magazin zwischen gegenüberliegenden Abschnitten des Reaktionskreises versetzt wird.

2. Vorrichtung zur chemischen Analyse nach Anspruch 1, wobei die Magazine in dem Vorbereitungskreis (60a, 62a) mit einer niedrigeren Geschwindigkeit befördert werden können als die Magazine in dem Reaktionskreis (60b, 62b).

3. Vorrichtung zur chemischen Analyse nach Anspruch 1 oder 2, wobei eine Testanordnung (38) mit Analyseeinrichtungen (40, 42, 44) zur Analyse der Proben in einem Kanal angeordnet ist, der einen Freiraum zwischen den gegenüberliegenden Reihen der Probenmagazine bildet.

4. Vorrichtung zur chemischen Analyse nach Anspruch 3, wobei ein Magazin, in dem eine Probenanalyse abgeschlossen ist, erst dann von dem Reaktionskreis in den Vorbereitungskreis versetzt wird, wenn das Magazin die Testanordnung innerhalb des Reaktionskreises mehr als einmal passiert hat.

5. Vorrichtung zur chemischen Analyse nach einem der vorhergehenden Ansprüche, wobei zwei Reagenzausgabestationen (24) vorhanden sind, die unabhängig voneinander wenigstens zwei Reagenzien zu Proben in den Magazinen im Reaktionskreis zugeben können und wobei weiterhin im Vorbereitungskreis Reinigung, Trocknen und Probenzugabe durchgeführt werden.

6. Vorrichtung zur chemischen Analyse nach einem der vorhergehenden Ansprüche, wobei ein Magazin, das zu analysierende Proben enthält, innerhalb und zwischen den gegenüberliegenden Abschnitten bewegt werden kann, die den Reaktionskreis bilden, um die Ergebnisse der chemischen Tests genügend lange zur Analyse jeder Probe zu überwachen.

7. Vorrichtung zur chemischen Analyse nach einem der Ansprüche 3 bis 6, wobei die Testanordnung eine Einrichtung enthält, die einzelne Proben mit Licht durchstrahlt, während ein Magazin zwischen den gegenüberliegenden Abschnitten transportiert wird, die den Reaktionskreis bilden, wobei als Analyseschritt das austretende Licht mit einem Spektrophotometer gemessen wird.

8. Verwendung einer Vorrichtung zur automatischen chemischen Analyse nach einem der vorhergehenden Ansprüche in einem Verfahren zur Analyse einer oder mehrerer Proben in einem Magazin.

*FIG.I.*

FIG. 2.

FIG. 3.

FIG. 4.

FIG. 5.

FIG.6.

FIG. 7.

FIG. 8.